# EUROPÄISCHE PATENTSCHRIFT

(11) **EP 2 675 654 B1**
(45) Veröffentlichungstag und Bekanntmachung des Hinweises auf die Patenterteilung: **04.03.2015**
(21) Anmeldenummer: 12703456.9
(22) Anmeldetag: 08.02.2012
(51) Int. Cl.: B60N 2/015, B60N 2/36

(54) **VERRIEGELUNGSEINRICHTUNG EINER UMKLAPPBAREN RÜCKENLEHNE EINES SITZES**
DEVICE FOR LOCKING A FOLDABLE BACKREST OF A REAR SEAT
DISPOSITIF DE VERROUILLAGE DE SIÈGE BASCULANT À DOSSIER RABATTABLE

(30) Priorität: 16.02.2011 DE 102011011570
(43) Veröffentlichungstag der Anmeldung: 25.12.2013
(73) Patentinhaber: Johnson Controls Components GmbH & Co. KG, 67657 Kaiserslautern (DE)
(72) Erfinder: TEUFEL, Ingo, 67806 Rockenhausen (DE); REIMER, Peter, 67305 Ramsen (DE)
(74) Vertreter: Wilhelm, Wolfgang
(86) Internationale Anmeldenummer: PCT/EP2012/000566
(87) Internationale Veröffentlichungsnummer: WO 2012/110211

(56) Entgegenhaltungen:
- DE-A1-102008 033 304

## Beschreibung

Die Erfindung bezieht sich auf eine Verriegelungseinrichtung einer umklappbaren Rückenlehne eines Sitzes, insbesondere eines Fondsitzes in einem Kraftfahrzeug, mit einem Verriegelungsgehäuse, in dem eine um eine Schwenkachse zwischen einer Verriegelungsstellung und einer Entriegelungsstellung schwenkbaren Handhabe angeordnet ist, durch die eine Sperrklinke einer Verriegelungsvorrichtung zwischen einer Sperrstellung und einer Entsperrstellung mitnehmbar ist, mit einem Blockierriegel, der durch ein abschließbares Schloss manuell zwischen einer die Handhabe in ihrer Verriegelungsstellung blockierenden Blockierstellung und einer die Handhabe freigebenden Freigabestellung bewegbar ist.

### Stand der Technik

Aus der DE102008033304A und der US 4,813,722 ist eine gattungsgemäße Verriegelungseinrichtung bekannt, bei welcher im abgeschlossenen Zustand ein Verschwenken der Handhabe nicht möglich ist.

Aus der DE 101 46 528 A1 ist eine abschließbare Verriegelungseinrichtung bekannt, bei welcher im abgeschlossenen Zustand ein Verschwenken der Handhabe möglich ist, ohne dass dabei eine Mitnahme der Sperrklinke erfolgt. Eine ähnlich Verriegelungsvorrichtung ist in der DE 199 16 223 C1 offenbart.

Bei derartigen Verriegelungsvorrichtungen besteht das Problem, dass der Blockierriegel durch das Schloss auch bei in Entsperrstellung befindlicher Sperrklinke in seiner Blockierstellung bewegbar ist. Dadurch wird eine korrekte Bewegung der Sperrklinke in ihre Sperrstellung behindert oder sogar vollständig unterbunden.

### Aufgabe

Aufgabe der Erfindung ist es, eine Verriegelungseinrichtung der eingangs genannten Art zu schaffen, die kein Abschließen der Verriegelungsvorrichtung bei in Entsperrstellung befindlicher Sperrklinke erlaubt.

### Lösung

Diese Aufgabe wird in Verbindung mit den Merkmalen des Oberbegriffs des Anspruchs 1 erfindungsgemäß dadurch gelöst, dass durch die Handhabe bei ihrer Bewegung aus der Verriegelungsstellung in die Entriegelungsstellung ein Übertragungselement in einer Führung von einer ersten Endstellung in eine zweiten Endstellung verschiebbar antreibbar ist, wobei das Übertragungselement ein daran fest angeordnetes Sperrelement aufweist, das bei einer Bewegung der Handhabe aus ihrer Verriegelungsstellung heraus in eine Sperrausnehmung des Blockierriegels hineinbewegbar ist und die Bewegbarkeit des Blockierriegels aus seiner Freigabestellung heraus in seine Blockierstellung sperrt.

Durch diese Ausbildung wird durch eine Bewegung der Handhabe aus ihrer Verriegelungsstellung heraus nicht nur die Sperrklinke in ihre Entsperrstellung bewegt sondern gleichzeitig der Blockierriegel in seiner Freigabestellung gesperrt, so dass der Blockierriegel nicht die freie Bewegbarkeit der Handhabe behindern oder sogar unterbinden kann.

Erst wenn sich die Handhabe wieder in ihrer Verriegelungsstellung befindet, ist der Blockierriegel wieder freigegeben und kann in seine die Handhabe blockierende Blockierstellung bewegt werden.

In einfacher Ausbildung kann die Sperrausnehmung eine sich quer zur Bewegungsrichtung des Blockierriegels erstreckende Sperrnut sein.

In ebenfalls einfacher Ausbildung ist das Sperrelement als Sperransatz ausgebildet, welcher quer zur Bewegungsrichtung des Übertragungselements von diesem hervorsteht.

Bei einer derartigen Ausbildung ist der Sperransatz des Übertragungselements quer zur Bewegungsrichtung des Blockierriegels aus einer Riegelentsperrstellung in eine Riegelsperrstellung in die Sperrnut des Blockierriegels hineinbewegbar.

In Doppelfunktion und damit Bauteile, Montageaufwand und Bauraum sparend kann an dem Übertragungselement eine Anzeigefahne angeordnet sein, die durch die Bewegung des Übertragungselements zwischen einer in der Führung versenkten Nichtanzeigestellung und einer teilweise aus der Führung und aus dem Verriegelungsgehäuse nach außen herausragenden Anzeigestellung verschiebbar antreibbar ist.

Die in ihrer Anzeigestellung sichtbare Anzeigefahne dient dazu, bei einem Personenkraftwagen mit umklappbarer Rückenlehne anzuzeigen, dass dessen Verriegelungseinrichtung nicht ordnungsgemäß verrastet ist und dadurch die Gefahr eines nach vorne Klappens der Rückenlehne bei einer Verzögerung während des Fahrbetriebs insbesondere beim Bremsen besteht.

Ist die Anzeigefahne bei in der Verriegelungsstellung befindlicher Handhabe durch Kraftbeaufschlagung ihres aus der Führung herausragenden äußeren Endbereichs entgegen einer Federkraft in ihre Nichtanzeigestellung bewegbar, so kann bei einer Kraftbeaufschlagung der in ihrer Anzeigestellung befindlichen Anzeigefahne die Anzeigefahne in das Verriegelungsgehäuse eintauchen.

In einfacher Ausbildung kann der Blockierriegel in einer Riegelführung des Verriegelungsgehäuses verschiebbar geführt sein.

Weist der Blockierriegel eine quer zu seiner Bewegungsrichtung gerichtete Riegelnut auf, in die ein mittels eines Schlüssels um eine sich quer zur Bewegungsrichtung des Blockierriegels erstreckende Schlossachse schwenkbarer Schlosszapfen des Schlosses hineinragt, so wird durch Drehen des Schlüssels um z.B. 90° der Schlosszapfen geschwenkt und der Blockierriegel zwischen seiner Freigabestellung und seiner Blockierstellung verschoben.

Zum Blockieren der Handhabe kann in einfacher Ausbildung die Handhabe eine quer zur Bewegungsrichtung des Blockierriegels gerichtete Blockierausnehmung aufweisen, in die der Blockierriegel in seiner Blockierstellung mit einem Blockierzapfen gleichen Querschnitts eingreift.

Bildet die Rückenlehne eine Trennwand zwischen einem Fahrgastraum und einem Kofferraum des Kraftfahrzeugs, so ist bei in Gebrauchsstellung befindlicher Lehne und verriegelter Verriegelungsvorrichtung durch das Schloss diese Lehnenstellung abschließbar. Es ist dann nicht möglich über den Fahrgastraum zum Kofferraum zu gelangen.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiel beschränkt. Es zeigen:

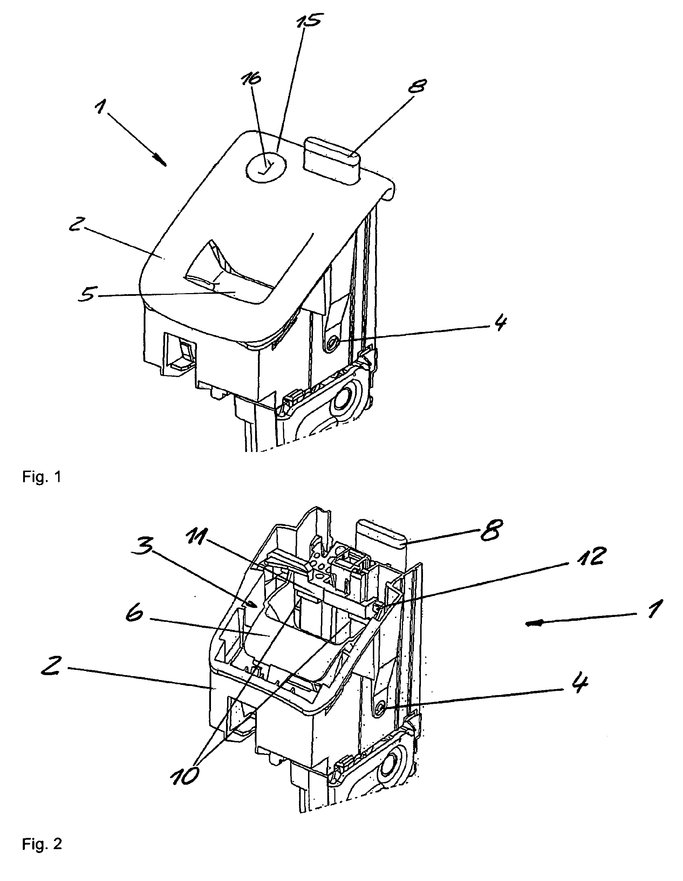

- Figur 1: eine perspektivische Ansicht einer geschlossenen Betätigungseinheit einer Verriegelungseinheit mit einer Handhabe in Entriegelungsstellung,
- Figur 2: eine perspektivische Ansicht der geöffneten Betätigungseinheit nach Figur 1 mit der Handhabe in Verriegelungsstellung, nicht abgeschlossen,

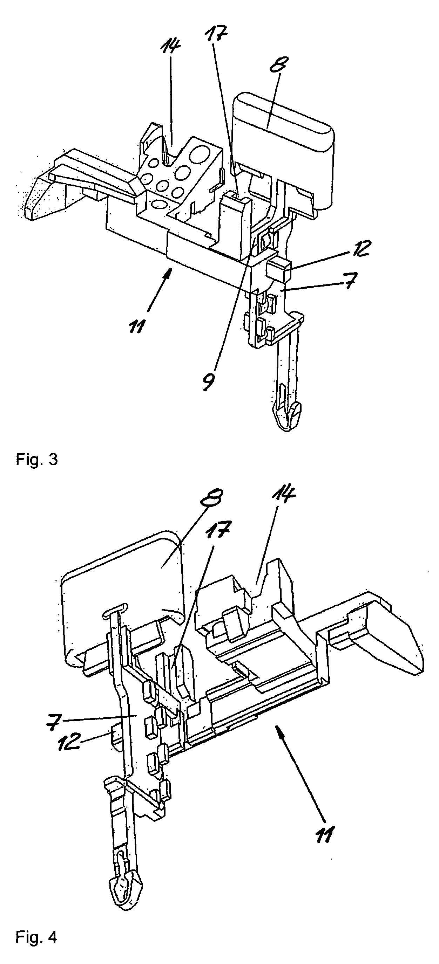

- Figur 3: eine perspektivische Ansicht von Blockierriegel und Übertragungselement entsprechend der Stellung in Figur 2,
- Figur 4: eine Ansicht entsprechend Figur 3 in anderer Perspektive,

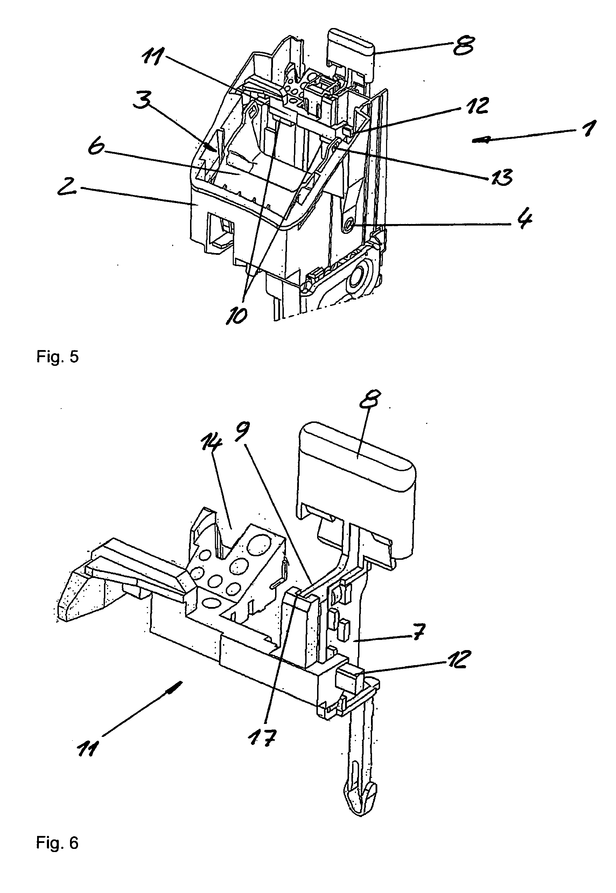

- Figur 5: eine perspektivische Ansicht der geöffneten Betätigungseinheit nach Figur 1 mit der Handhabe in Entriegelungsstellung, nicht abgeschlossen,
- Figur 6: eine perspektivische Ansicht von Blockierriegel und Übertragungselement entsprechend der Stellung in Figur 5,

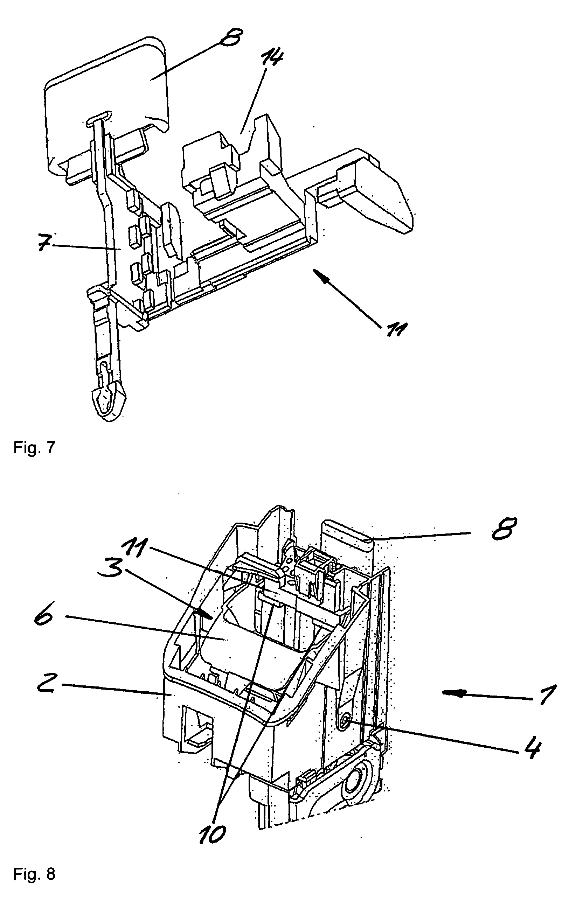

- Figur 7: eine Ansicht entsprechend Figur 6 in anderer Perspektive,
- Figur 8: eine perspektivische Ansicht der geöffneten Betätigungseinheit nach Figur 1 mit der Handhabe in Verriegelungsstellung, abgeschlossen,

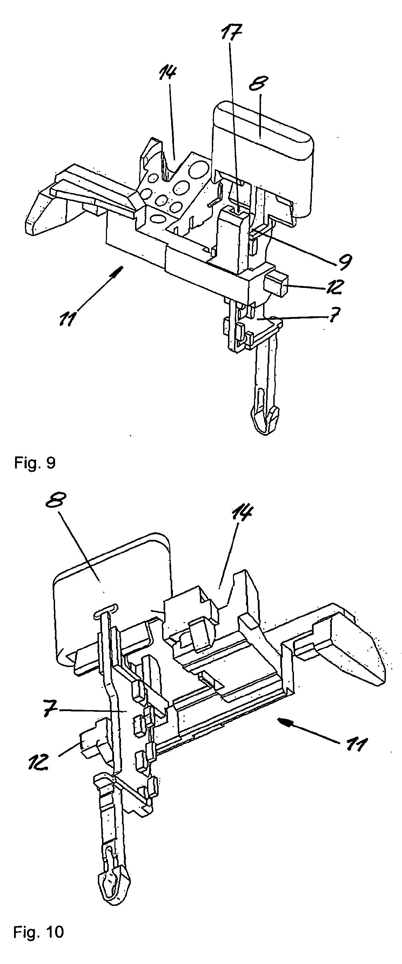

- Figur 9: eine perspektivische Ansicht von Blockierriegel und Übertragungselement entsprechend der Stellung in Figur 8 und
- Figur 10: eine Ansicht entsprechend Figur 9 in anderer Perspektive.

Die in den Figuren dargestellte Verriegelungseinrichtung weist eine Betätigungseinheit 1 mit einem Verriegelungsgehäuse 2 auf. Unterhalb der Betätigungseinheit 1 besitzt die Verriegelungseinrichtung eine Verriegelungsvorrichtung der bekannten Art. Sie weist einen randseitig offenen Eintrittschlitz auf, durch den ein fest an einem Karosserieteil eines Kraftfahrzeugs angeordneter Verriegelungsbolzen quer einführbar ist.

In einer Lagerbohrung ist eine nicht dargestellte Drehfalle schwenkbar lagerbar, durch die in der Verschlussstellung der Drehfalle der in den Eintrittsschlitz eingeführte Verriegelungsbolzen gefangen ist.

Zur Sicherung der Drehfalle in der Verschlussstellung besitzt die Drehfalle einen etwa radial hervorstehenden Ansatz, der in der Verschlussstellung der Drehfalle von einem Sperrhaken einer Sperrklinke hintergreifbar ist.

Die Sperrklinke ist in der Verriegelungsgehäusehälfte um eine Schwenkachse zwischen einer Sperrstellung und einer Entsperrstellung schwenkbar.

An der Sperrklinke ist das eine Ende einer Koppel um eine zur Schwenkachse parallele erste Achse schwenkbar angelenkt, deren anderes Ende an einer Handhabe 3 um eine zweite Achse schwenkbar angelenkt ist.

Eine gattungsgemäße Verriegelungsvorrichtung ist beispielsweise in der WO 2010/003587 A1 bekannt, auf deren diesbezüglichen Offenbarungsgehalt ausdrücklich Bezug genommen wird.

Die Handhabe 3 ist in dem mit der Betätigungseinheit 1 verbundenen Verriegelungsgehäuse 2 um eine zur zweiten Achse parallele zweite Schwenkachse 4 schwenkbar gelagert und besitzt einen durch eine Öffnung 5 des Verriegelungsgehäuses 2 nach außen ragenden Handgriff 6, mittels dessen die Handhabe 3 zwischen einer Verriegelungsstellung und einer Entriegelungsstellung manuell schwenkbar ist, wobei die Sperrklinke zwischen der Sperrstellung und der Entsperrstellung schwenkbar ist.

In einem radialen Abstand von der zweiten Schwenkachse 4 nach links ist ein nicht dargestellter zweiarmiger Hebel um eine zur zweiten Schwenkachse parallele Hebelachse schwenkbar gelagert.

Der Hebel besitzt einen ersten Arm, der in einem Abstand zur Hebelachse eine konvexartige Anlagefläche besitzt, die an einer ebenfalls konvexartig ausgebildeten Beaufschlagungsfläche der Handhabe in Anlage ist.

Ein zweiter Arm des Hebels ragt auf die rechte Seite der Handhabe 3 und weist an seinem freien Ende eine Verstellfläche auf, die nach oben gerichtet ist.

In einer vertikalen Führung des Verriegelungsgehäuses 2 ist ein Übertragungselement 7 zwischen einer ersten Endstellung und einer zweiten Endstellung verschiebbar geführt angeordnet.

Das Übertragungselement 7 besitzt eine Anzeigefahne 8, die in der Nichtanzeigestellung mit dem Übertragungselement 7 weitgehend in der Führung in das Verriegelungsgehäuse 2 eingefahren und in der Anzeigestellung nach oben aus dem Verriegelungsgehäuse 2 herausragend ausgefahren ist.

Die Anzeigefahne 8 befindet sich in ihrer Nichtanzeigestellung, wenn sich die Handhabe 3 in ihrer Verriegelungsstellung befindet und wenn sich das Übertragungselement 7 in seiner ersten Endstellung befindet. Ist die Handhabe 3 in ihrer Entriegelungsstellung, so wird dies durch die in ihrer Anzeigestellung befindliche Anzeigefahne 8 angezeigt, wobei sich das Übertragungselement 7 in seiner zweiten Endstellung befindet.

Das Übertragungselement 7 weist weiterhin ein Sperrelement auf, welches als Sperransatz 9 ausgebildet ist, der quer zur Bewegungsrichtung des Übertragungselements 7 von diesem hervorsteht.

An dem Verriegelungsgehäuse 2 ist eine Riegelführung 10 ausgebildet, in der ein Blockierriegel 11 quer zur Bewegungsrichtung des Übertragungselements 7 zwischen einer Blockierstellung und einer Freigabestellung verschiebbar geführt ist.

Der Blockierriegel 11 besitzt an seinem einen Ende einen Blockierzapfen 12 etwa gleichen Querschnitts wie eine Blockierausnehmung 13 in der Handhabe 3.

In der Verriegelungsstellung der Handhabe 3 liegt der Blockierzapfen 12 in Bewegungsrichtung des Blockierriegels 11 der Blockierausnehmung 13 gegenüber, so dass der Blockierzapfen 12 bei Verschieben des Blockierriegels 11 aus dessen Freigabestellung in dessen Blockierstellung in Eingriff in die Blockierausnehmung 13 gelangt und die Handhabe 3 in ihrer Verriegelungsstellung blockiert.

Zum Verschieben des Blockierriegels 11 in seiner Regelführung 10 weist der Blockierriegel 11 eine Riegelnut 14 auf, die quer zu seiner Bewegungsrichtung nach außen mündet. In die Riegelnut 14 ragt mit seinem freien Ende ein nicht dargestellter Schlosszapfen hinein, der an seinem anderen Ende um eine Schlossachse schwenkbar gelagert ist.

In dem Verriegelungsgehäuse 2 ist ein Schloss 15 angeordnet, das einen Schlossschlitz 16 zum Einführen eines Schlüssels aufweist, und an welchem der erwähnte Schlosszapfen angeordnet ist. Durch Drehen des Schlüssels um 90° wird auch der Schlosszapfen um 90° geschwenkt.

Je nach Drehrichtung wird dadurch der Blockierriegel 11 in seine Blockierstellung bzw. in seine Freigabestellung verschoben.

Der Blockierriegel 11 weist weiterhin als Sperrausnehmung eine Sperrnut 17 auf, die sich quer zur Bewegungsrichtung des Blockierriegels 11 erstreckt und in ihrer Erstreckungsrichtung und zur Seite des Übertragungselements 7 hin offen ist. Die Sperrnut 17 erstreckt sich in Bewegungsrichtung des Übertragungselements 7 und in Bewegungsrichtung des Sperransatzes 9.

Befindet sich der Blockierriegel 11 in seiner Freigabestellung, fluchten Sperrnut 17 und Sperransatz 9 zueinander.

Die Handhabe 3 kann dabei zwischen ihrer Verriegelungsstellung und ihrer Entriegelungsstellung bewegt werden.

Durch eine Bewegung der Handhabe 3 aus der Verriegelungsstellung in die Entriegelungsstellung wird das Übertragungselement 7 aus der ersten Endstellung in die zweite Endstellung bewegt. Dabei taucht der Sperransatz 9 des Übertragungselements 7 quer zur Bewegungsrichtung des Blockierriegels 11 in die Sperrnut 17 ein und sperrt dadurch den Blockierriegel 11 gegen eine Bewegung aus seiner Freigabestellung heraus in seine Blockierstellung.

Erst, wenn die Handhabe 3 vollständig wieder aus ihrer Entriegelungsstellung in ihre Verriegelungsstellung bewegt ist, befindet sich der Sperransatz 9 nicht mehr in der Sperrnut 17, so dass der Blockierriegel 11 durch Drehen des Schlüssels und Schwenken des Schlosszapfens verschiebbar ist.

### Bezugszeichenliste

- 1: Betätigungseinheit
- 2: Verriegelungsgehäuse
- 3: Handhabe
- 4: Schwenkachse
- 5: Öffnung
- 6: Handgriff
- 7: Übertragungselement
- 8: Anzeigefahne
- 9: Sperransatz
- 10: Riegelführung
- 11: Blockierriegel
- 12: Blockierzapfen
- 13: Blockierausnehmung
- 14: Riegelnut
- 15: Schloss
- 16: Schlossschlitz
- 17: Sperrnut

## Patentansprüche

1. Verriegelungseinrichtung einer umklappbaren Rückenlehne eines Sitzes, insbesondere eines Fondsitzes in einem Kraftfahrzeug, mit einem Verriegelungsgehäuse (2), in dem eine um eine Schwenkachse (4) zwischen einer Verriegelungsstellung und einer Entriegelungsstellung schwenkbare Handhabe (3) angeordnet ist, durch die eine Sperrklinke einer Verriegelungsvorrichtung zwischen einer Sperrstellung und einer Entsperrstellung mitnehmbar ist, mit einem Blockierriegel (11), der durch ein abschließbares Schloss (15) manuell zwischen einer die Handhabe (3) in ihrer Verriegelungsstellung blockierenden Blockierstellung und einer die Handhabe (3) freigebenden Freigabestellung bewegbar ist,
**dadurch gekennzeichnet, dass**
durch die Handhabe (3) bei ihrer Bewegung aus der Verriegelungsstellung in die Entriegelungsstellung ein Übertragungselement (7) in einer Führung von einer ersten Endstellung in eine zweite Endstellung verschiebbar antreibbar ist, wobei das Übertragungselement (7) ein daran fest angeordnetes Sperrelement aufweist, das bei Bewegung der Handhabe (3) aus ihrer Verriegelungsstellung heraus in eine Sperrausnehmung des Blockierriegels (11) hineinbewegbar ist und die Bewegbarkeit des Blockierriegels (11) aus seiner Freigabestellung heraus in seine Blockierstellung sperrt.

2. Verriegelungseinrichtung nach Anspruch 1, **dadurch gekennzeichnet, dass** die Sperrausnehmung eine sich quer zur Bewegungsrichtung des Blockierriegels (11) erstreckende Sperrnut (17) ist.

3. Verriegelungseinrichtung nach Anspruch 2, **dadurch gekennzeichnet, dass** das Sperrelement als Sperransatz (9) ausgebildet ist, welcher quer zur Bewegungsrichtung des Übertragungselements (7) von diesem hervorsteht.

4. Verriegelungseinrichtung nach Anspruch 3, **dadurch gekennzeichnet, dass**, der Sperransatz (9) des Übertragungselements (7) quer zur Bewegungsrichtung des Blockierriegels (11) aus einer Riegelentsperrstellung in eine Riegelsperrstellung in die Sperrnut (17) des Blockierriegels (11) hineinbewegbar ist.

5. Verriegelungseinrichtung nach einem der vorhergehenden Ansprüche, **dadurch gekennzeichnet, dass** an dem Übertragungselement (7) eine Anzeigefahne (8) angeordnet ist, die durch die Bewegung des Übertragungselements (7) zwischen einer in der Führung versenkten Nichtanzeigestellung und einer teilweise aus der Führung und aus dem Verriegelungsgehäuse (2) nach außen herausragenden Anzeigestellung verschiebbar antreibbar ist.

6. Verriegelungseinrichtung nach Anspruch 5, **dadurch gekennzeichnet, dass** die Anzeigefahne (8) bei in der Verriegelungsstellung befindlicher Handhabe (3) durch Kraftbeaufschlagung ihres aus der Führung herausragenden äußeren Endbereichs entgegen einer Federkraft in ihre Nichtanzeigestellung bewegbar ist.

7. Verriegelungseinrichtung nach einem der vorhergehenden Ansprüche, **dadurch gekennzeichnet, dass** der Blockierriegel (11) in einer Riegelführung (10) des Verriegelungsgehäuses (2) verschiebbar geführt ist.

8. Verriegelungseinrichtung nach einem der vorhergehenden Ansprüche, **dadurch gekennzeichnet, dass** der Blockierriegel (11) eine quer zu seiner Bewegungsrichtung gerichtete Riegelnut (14) aufweist, in die ein mittels eines Schlüssels um eine sich quer zur Bewegungsrichtung des Blockierriegels (11) erstreckende Schlossachse schwenkbarer Schlosszapfen des Schlosses (15) hineinragt.

9. Verriegelungseinrichtung nach einem der vorhergehenden Ansprüche, **dadurch gekennzeichnet, dass** die Handhabe (3) eine quer zur Bewegungsrichtung des Blockierriegels (11) gerichtete Blockierausnehmung (13) aufweist, in die der Blockierriegel (11) in seiner Blockierstellung mit einem Blockierzapfen (12) gleichen Querschnitts eingreift.

10. Verriegelungseinrichtung nach einem der vorhergehenden Ansprüche, **dadurch gekennzeichnet, dass** die Rückenlehne eine Trennwand zwischen einem Fahrgastraum und einem Kofferraum des Kraftfahrzeugs bildet.

## Claims

1. Locking device for a fold-over backrest of a seat, in particular a rear seat in a motor vehicle, comprising a locking housing (2) in which a handle (3) which is able to be pivoted about a pivot axis (4) between a locked position and an unlocked position is arranged, by means of which handle a locking pawl of a locking mechanism is able to be driven between a locked position and an unlocked position, comprising a blocking bolt (11) which is able to move manually by means of a closable lock (15) between a blocked position blocking the handle (3) in the locked position thereof and a released position releasing the handle (3),
**characterized in that**
by means of the handle (3), when moved from the locked position into the unlocked position, a transmission element (7) is able to be displaceably driven in a guide from a first end position into a second end position, wherein the transmission element (7) has a locking element fixedly arranged thereon and which, when the handle (3) is moved from the locked position thereof, is able to be moved into a locking recess of the blocking bolt (11) and blocks the ability of the blocking bolt (11) to move from the released position thereof into the blocked position thereof.

2. Locking device according to Claim 1, **characterized in that** the locking recess is a locking groove (17) extending transversely to the direction of movement of the blocking bolt (11).

3. Locking device according to Claim 2, **characterized in that** the locking element is configured as a locking projection (9) which protrudes from the transmission element, transversely to the direction of movement of the transmission element (7).

4. Locking device according to Claim 3, **characterized in that** the locking projection (9) of the transmission element (7) is able to move into the locking groove (17) of the blocking bolt (11), transversely to the direction of movement of the blocking bolt (11), from an unlocked position of the bolt into a locked position of the bolt.

5. Locking device according to one of the preceding claims, **characterized in that** an indicating tab (8) is arranged on the transmission element (7), said indicating tab being able to be displaceably driven by the movement of the transmission element (7) between a non-indicating position retracted into the guide and an indicating position outwardly protruding partially from the guide and from the locking housing (2).

6. Locking device according to Claim 5, **characterized in that**, when the handle (3) is in the locked position, the indicating tab (8) is able to move counter to a spring force into its non-indicating position by its outer end region protruding from the guide being subjected to force.

7. Locking device according to one of the preceding claims, **characterized in that** the blocking bolt (11) is displaceably guided in a bolt guide (10) of the locking housing (2).

8. Locking device according to one of the preceding claims, **characterized in that** the blocking bolt (11) has a bolt groove (14) oriented transversely to its direction of movement, into which a lock pin of the lock (15) protrudes, said lock pin being pivotable by means of a key about a lock axis extending transversely to the direction of movement of the blocking bolt (11).

9. Locking device according to one of the preceding claims, **characterized in that** the handle (3) has a blocking recess (13) oriented transversely to the direction of movement of the blocking bolt (11), into which the blocking bolt (11) engages in the blocked position thereof with a blocking pin (12) of the same cross section.

10. Locking device according to one of the preceding claims, **characterized in that** the backrest forms a partition between a passenger compartment and a luggage space of the motor vehicle.

## Revendications

1. Dispositif de verrouillage du dossier basculant d'un siège, en particulier d'un siège arrière dans un véhicule automobile, avec un boîtier de verrouillage (2), dans lequel est disposée une manette (3) pouvant pivoter autour d'un axe de pivotement (4) entre une position de verrouillage et une position de déverrouillage, par laquelle un cliquet d'arrêt d'un dispositif de verrouillage peut être entraîné entre une position d'arrêt et une position de libération, avec un verrou de blocage (11), qui peut être déplacé manuellement au moyen d'une serrure verrouillable (15) entre une position de blocage bloquant la manette (3) dans sa position de verrouillage et une position de libération libérant la manette (3), **caractérisé en ce qu'**un élément de transmission (7) peut être entraîné en mouvement coulissant dans un guidage d'une première position d'extrémité à une deuxième position d'extrémité par la manette (3) lors de son mouvement de la position de verrouillage à la position de déverrouillage, dans lequel l'élément de transmission (7) présente un élément d'arrêt fixé sur celui-ci, qui peut être engagé dans un évidement d'arrêt du verrou de blocage (11) lors du mouvement de la manette (3) hors de sa position de verrouillage et qui bloque la mobilité du verrou de blocage (11) de sa position de libération à sa position de blocage.

2. Dispositif de verrouillage selon la revendication 1, **caractérisé en ce que** l'évidement d'arrêt est une rainure d'arrêt (17) s'étendant transversalement à la direction de mouvement du verrou de blocage (11).

3. Dispositif de verrouillage selon la revendication 2, **caractérisé en ce que** l'élément d'arrêt est formé par un élément d'arrêt (9), qui est saillant sur l'élément de transmission (7) transversalement à la direction de mouvement de celui-ci.

4. Dispositif de verrouillage selon la revendication 3, **caractérisé en ce que** l'élément d'arrêt (9) de l'élément de transmission (7) peut être déplacé dans la rainure d'arrêt (17) du verrou de blocage (11) transversalement à la direction de mouvement du verrou de blocage (11) depuis une position de libération de verrou jusqu'à une position d'arrêt de verrou.

5. Dispositif de verrouillage selon l'une quelconque des revendications précédentes, **caractérisé en ce qu'**un fanion d'affichage (8) est disposé sur l'élément de transmission (7), et peut être entraîné en mouvement coulissant par le mouvement de l'élément de transmission (7) entre une position de non-affichage abaissée dans le guidage et une position d'affichage saillante vers l'extérieur hors du boîtier de verrouillage (2).

6. Dispositif de verrouillage selon la revendication 5, **caractérisé en ce que** le fanion d'affichage (8) peut être déplacé dans sa position de non-affichage contre une force de ressort, lorsque la manette (3) se trouve dans la position de verrouillage, par l'application d'une force à sa région d'extrémité extérieure sortant hors du guidage.

7. Dispositif de verrouillage selon l'une quelconque des revendications précédentes, **caractérisé en ce que** le verrou de blocage (11) est guidé de façon coulissante dans un guidage de verrou (10) du boîtier de verrouillage (2).

8. Dispositif de verrouillage selon l'une quelconque des revendications précédentes, **caractérisé en ce que** le verrou de blocage (11) présente une rainure de verrou (14) orientée transversalement à sa direction de mouvement, dans laquelle s'engage un pivot de serrure de la serrure (15) pouvant pivoter au moyen d'une clé autour d'un axe de serrure s'étendant transversalement à la direction de mouvement du verrou de blocage (11).

9. Dispositif de verrouillage selon l'une quelconque des revendications précédentes, **caractérisé en ce que** la manette (3) présente un évidement de blocage (13) orienté transversalement à la direction de mouvement du verrou de blocage (11), dans lequel le verrou de blocage (11) s'engage dans sa position de blocage avec un pivot de blocage (12) de même section transversale.

10. Dispositif de verrouillage selon l'une quelconque des revendications précédentes, **caractérisé en ce que** le dossier forme une paroi de séparation entre un habitacle et un coffre à bagages d'un véhicule automobile.
